(19) Europäisches Patentamt
European Patent Office
Office européen des brevets

(11) EP 2 867 643 B1

## (12) FASCICULE DE BREVET EUROPEEN

(45) Date de publication et mention
de la délivrance du brevet:
**08.03.2017 Bulletin 2017/10**

(21) Numéro de dépôt: **13729726.3**

(22) Date de dépôt: **19.06.2013**

(51) Int Cl.:
**G01M 17/02** *(2006.01)*    **G01L 3/00** *(2006.01)*
**G01M 9/06** *(2006.01)*    **G01M 17/013** *(2006.01)*

(86) Numéro de dépôt international:
**PCT/EP2013/062696**

(87) Numéro de publication internationale:
**WO 2014/001166 (03.01.2014 Gazette 2014/01)**

(54) **PROCEDE POUR DETERMINER LE MOMENT RESISTANT AERODYNAMIQUE D'UNE ROUE**

VERFAHREN ZUR ERMITTLUNG DES AERODYNAMISCHEN MOMENTS DES WIDERSTANDS EINES RADES

METHOD FOR DETERMINING THE AERODYNAMIC MOMENT OF RESISTANCE OF A WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2012 FR 1256260**

(43) Date de publication de la demande:
**06.05.2015 Bulletin 2015/19**

(73) Titulaires:
* **Compagnie Générale des Etablissements Michelin**
**63000 Clermont-Ferrand (FR)**
* **MICHELIN Recherche et Technique S.A.**
**1763 Granges-Paccot (CH)**

(72) Inventeur: **GARDARIN, Benoit**
**F-63040 Clermont-Ferrand Cedex 9 (FR)**

(74) Mandataire: **Bauvir, Jacques**
**Manufacture Française des Pneumatiques Michelin**
**23, place des Carmes-Déchaux**
**DGD/PI - 35/Ladoux**
**63040 Clermont-Ferrand Cedex 9 (FR)**

(56) Documents cités:
**DE-A1- 19 527 742    DE-A1-102008 046 552**

**Description**

L'invention concerne un procédé pour déterminer précisément le moment résistant aérodynamique d'une roue. Ce procédé s'applique sur les véhicules de transport terrestre.

On rappelle qu'une roue est définie comme étant constituée d'une jante, d'un disque de roue et d'un pneumatique. Le pneumatique, encore appelé enveloppe, est monté sur la jante pour former une roue.

Des mesures réglementaires de consommation et de pollution sont couramment pratiquées sur les voitures légères et les utilitaires légers dans de nombreux pays. Malheureusement ces mesures ne permettent pas de déterminer précisément la force de résistance à l'avancement des pneumatiques. Des exemples de procédés de tests sont décrits, par exemple, dans les documents DE19527742 ou DE102008046552.

Il est rappelé que la force de résistance à l'avancement induite par un pneumatique comprend les trois composantes suivantes : la traînée (ou force) de résistance au roulement, la traînée aérodynamique, et le moment résistant aérodynamique (ou brassage aérodynamique).

Aussi pour calculer ou estimer cette force de résistance à l'avancement, les praticiens réalisent des mesures, sur banc d'essai, du pneumatique monté simplement sur jante, ou recourent encore à la simulation avec l'aide de logiciels informatiques.

Mais ces mesures ou simulation, réalisées sur banc d'essai, ne permettent pas d'obtenir des valeurs de moment résistant aérodynamique, proches de valeurs rencontrées dans des conditions d'usage réel d'un pneumatique. En effet, les techniques de mesures actuelles effectuent uniquement une estimation du moment résistant aérodynamique par une simple mise en décélération du pneumatique monté sur jante et disposé dans un environnement ouvert, libéré de toute protection.

Des paramètres physiques, comme le moment résistant aérodynamique, font pour l'instant, l'objet d'estimations mathématiques qui restent malgré tout insatisfaisantes, car estimées de manière insuffisante.

Ainsi une mesure plus précise et plus réaliste du moment résistant aérodynamique permettrait de mieux évaluer la résistance à l'avancement induite par une roue, et par conséquent son impact sur la consommation de carburant.

Aussi, il subsiste le besoin de pouvoir disposer d'un procédé pour déterminer très précisément, de manière fiable et reproductible, le moment résistant aérodynamique d'une roue, dans des conditions similaires à celles de conditions d'utilisations usuelles.

L'invention a donc pour objet un procédé pour déterminer le moment résistant aérodynamique $M_{aéro-EM}$ d'une roue disposée sur un axe, par la mesure de la valeur de la puissance mécanique $P_m$ à appliquer sur la roue pour la maintenir en rotation à une vitesse $\omega$ constante, ladite roue étant équipée d'un moyen d'entrainement en rotation, et d'un dispositif pour relever et/ou enregistrer les valeurs numériques de ladite puissance mécanique et celles de la vitesse de rotation.

L'invention se caractérise en ce que ladite roue est protégée par un capot amovible, en ce qu'elle est soumise constamment à un écoulement d'air permettant de reproduire les effets d'un vent de travers et présentant une direction principale ayant un angle compris entre -40° et +40° par rapport à celle de la roue, et en ce que les mesures de vitesse de rotation $\omega$ et de puissance mécanique $P_m$ de ladite roue relevées sont reportées dans la formule mathématique suivante :

$$P_m = \omega \left( M_{aéro-EM} + M_f \right) \qquad\qquad \textbf{(I)}$$

où

- $P_m$ représente la puissance mécanique nécessaire pour maintenir la roue en rotation à une vitesse constante,
- $\omega$ représente la vitesse de rotation de ladite roue,
- $M_f$ représente la valeur du moment de frottement du moyeu de la roue, et
- $M_{aéro-EM}$ représente le moment résistant aérodynamique de ladite roue.

Le procédé selon l'invention présente l'avantage de pouvoir s'appliquer à tout type de jante, d'enjoliveur ou de pneumatique, de présenter un faible coût dans sa réalisation, et d'être de mise en oeuvre simple et rapide.

Enfin, ce procédé permet de fournir rapidement et aisément des données numériques similaires à celles rencontrées sur un véhicule en situation de roulage usuelle.

La protection de la roue par un capot amovible selon le procédé de l'invention permet de reconstituer les conditions réelles de roulage d'une roue, c'est-à-dire disposer la roue dans une enceinte semi-protégée, habituellement constituée par le passage de roue d'un véhicule. Le capot selon l'invention peut présenter toutes les formes géométriques tridimensionnelles les plus proches de celles rencontrées avec les passages de roues des véhicules terrestres.

Jusqu'ici la mesure de la résistance au roulement d'un pneumatique neuf, monté sur jante et mis sous pression, est réalisée en utilisant des modèles normés, en laboratoire. Parmi ces modèles, on peut citer par exemple celui de la norme ISO/FDIS 28580 qui considère différents paramètres physiques et mathématiques afin de les mesurer ou de les calculer ; l'ensemble des résultats obtenus permettant d'évaluer et/ou de quantifier le plus précisément possible la résistance au roulement d'un pneumatique.

Le paramètre relatif à la cinématique d'un ensemble roulant d'un véhicule de transport terrestre (automobile, camionnette, poids-lourds) est constitué de deux mouvements différents : un mouvement de translation horizontal et un mouvement de rotation. Ces deux mouvements induisent des contraintes liés à l'écoulement de l'air autour du pneumatique, puisque l'écoulement de l'air génère à la surface d'un pneumatique un champ de pressions et un champ de frottement visqueux.

Les contraintes aérodynamiques qui s'exercent sur de tels ensembles roulants entraînent l'apparition, d'une part, d'un effort résistant longitudinal de traînée et, d'autre part, d'un moment résistant aérodynamique qui s'oppose à la rotation des roues.

Si l'effort longitudinal résistant de traînée est aisément évalué par les modèles mathématiques actuels qui utilisent les mesures obtenues en soufflerie, le moment résistant aérodynamique n'est pas pris en considération lors des mesures en soufflerie. Cette résultante, étant jusqu'ici considérée comme une composante parasite, influence toutefois de manière non négligeable les résultats de consommation de carburant lié à la résistance à l'avancement de la roue.

Le procédé selon l'invention, de réalisation simple, permet de quantifier ce moment résistant aérodynamique dans des conditions similaires à celles rencontrées par une roue en situation de roulage réel.

En effet, le procédé selon l'invention dispose la roue dans des conditions très proches des conditions de roulage usuelles puisque la roue est, d'une part, protégée par un capot amovible, destiné à reproduire les effets protecteur d'un passage de roue de véhicule et, d'autre part, est soumise à un écoulement d'air.

On ne retrouve pas une telle situation dans l'application des modèles normés en laboratoire puisque la roue est disposée dans un environnement ouvert sans aucun protection (du fait de l'absence de capot) et n'est pas soumise à un écoulement d'air, excepté celui qu'elle génère par son propre fonctionnement.

Ainsi les contraintes, liées aux frottements et aux pressions, provoquant la naissance du moment résistant aérodynamique, seront différentes dans le procédé selon l'invention et dans les modes de mesure utilisés jusqu'ici.

De manière préférée, l'écoulement d'air utilisé selon le procédé de l'invention présente une direction principale sensiblement parallèle à celle de la roue.

L'écoulement d'air peut présenter une direction principale présentant un angle compris entre -40° et +40° par rapport à celle de la roue. Cette solution permet de reproduire le plus exactement possible les effets d'un vent de travers, avant ou arrière, en situation de roulage réelle.

De manière préférée, pour mettre en oeuvre ce procédé, l'axe de la roue reste fixe par rapport au sol immobile. Ceci signifie qu'il n'y a pas de mouvement relatif entre la roue et le moyen d'entraînement en rotation. L'axe de la roue reste de préférence fixe alors que le moyen d'entraînement poursuit sa rotation. Le moyen d'entraînement en rotation peut être un tapis roulant.

De manière préférée, l'écoulement d'air présente une vitesse identique ou différente de celle du tapis roulant.

La roue comprend de préférence au moins un moyen de maintien de la suspension de la roue.

L'invention va maintenant être décrite à l'aide des exemples et de la figure unique qui suivent et qui ne sont nullement limitatifs, et dans laquelle :

- la figure unique représente la valeur du moment résistant aérodynamique en fonction de la surface externe de différents pneumatiques.

Pour mettre en oeuvre ce procédé, une roue est placée dans une soufflerie aérodynamique, et est reliée à un moyen mécanique de mise en rotation afin de la faire tourner de manière constante à une vitesse $\omega$. Lors de sa rotation, la roue n'est pas en contact avec le sol. La distance entre la roue et le sol est de préférence faible. La roue est également reliée à un moyen destinée à la stabiliser dans sa rotation afin d'effectuer correctement les mesures.

La roue est équipée d'un dispositif destiné à relever et/ou enregistrer les valeurs numériques de sa vitesse de rotation $\omega$ et de la puissance mécanique qu'il faut appliquer pour maintenir sa rotation.

Selon une variante de réalisation du procédé selon l'invention, la roue peut être montée sur un véhicule qui sera alors fixé au sol à l'aide de mâts. Un tapis roulant entraine en rotation au moins une roue. Un moyen d'élévation du véhicule permet d'extraire le véhicule du sol de la soufflerie. La fixation du véhicule au sol permet, d'une part, d'imposer l'assiette du véhicule, et, d'autre part, de le stabiliser lors de son élévation. La soufflerie soumet le véhicule à un écoulement d'air ayant une vitesse $V_0$ identique à la vitesse de rotation $\omega$ d'au moins une roue.

L'application de la formule mathématique (I) ci-dessous permet d'obtenir la valeur du moment résistant aérodynamiqe $M_{aéro-EM}$ de la roue selon la formule mathématique (I) suivante :

$$P_m = \omega \left( M_{aéro-EM} + M_f \right) \qquad (I)$$

- $P_m$ représente la puissance mécanique nécessaire pour maintenir la roue en rotation à une vitesse constante,
- $\omega$ représente la vitesse de rotation de ladite roue,
- $M_f$ représente la valeur du moment de frottement du moyeu de la roue, et
- $M_{aéro-EM}$ représente le moment résistant aérodynamique de ladite roue.

$M_f$, qui représente la valeur du moment de frottement du moyeu de la roue, peut être calculée, par exemple, à partir des caractéristiques techniques fournies par le constructeur des roulements.

La vitesse de rotation $\omega$ est obtenue à partir du moyen d'enregistrement de la vitesse de rotation de la roue.

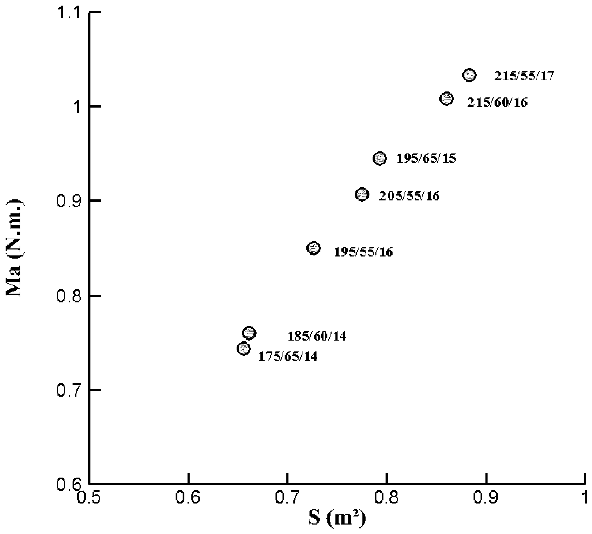

La figure 1 donne, pour 7 références de pneumatiques différentes de même marque et de même modèle, mais de dimensions différentes, la valeur calculée du moment résistant aérodynamique $M_{aéro-EM}$ (N.m) en fonction de la surface externe de chaque pneumatique ($m^2$). La surface externe du pneumatique est définie, selon l'invention, comme étant la surface de la bande de roulement et celle des flancs.

Les calculs, selon la figure unique, ont été effectués avec une vitesse de l'écoulement de l'air et une vitesse de rotation de la roue identiques, égales à 120km/h. L'écoulement d'air présente une direction principale sensiblement parallèle à celle de la roue.

De la figure 1, on peut voir que la valeur du moment résistant aérodynamique augmente proportionnellement avec la surface externe du pneumatique.

## Revendications

1. Procédé pour déterminer le moment résistant aérodynamique $M_{aéro-EM}$ d'une roue disposée sur un axe, par la mesure de la valeur de la puissance mécanique $P_m$ à appliquer sur la roue pour la maintenir en rotation à une vitesse $\omega$ constante, ladite roue étant équipée d'un moyen d'entrainement en rotation, et d'un dispositif pour relever et/ou enregistrer les valeurs numériques de ladite puissance mécanique et celles de la vitesse de rotation, **caractérisé en ce que** ladite roue est protégée par un capot amovible, **en ce qu'**elle est soumise constamment à un écoulement d'air permettant de reproduire les effets d'un vent de travers et présentant une direction principale ayant un angle compris entre -40° et +40° par rapport à celle de la roue, **et en ce que** les mesures de vitesse de rotation $\omega$ et de puissance mécanique $P_m$ de ladite roue relevées sont reportées dans la formule mathématique suivante :

$$P_m = \omega \left( M_{aéro-EM} + M_f \right) \qquad \mathbf{(I)}$$

où

- $P_m$ représente la puissance mécanique nécessaire pour maintenir la roue en rotation à une vitesse constante,
- $\omega$ représente la vitesse de rotation de ladite roue,
- $M_f$ représente la valeur du moment de frottement du moyeu de la roue, et
- $M_{aéro-EM}$ représente le moment résistant aérodynamique de ladite roue.

2. Procédé selon la revendication 1, **caractérisé en ce que** l'écoulement d'air présente une direction principale sensiblement parallèle à celle de la roue.

3. Procédé selon l'une des revendications précédentes, **caractérisé en ce que** l'axe de la roue reste fixe par rapport au sol.

4. Procédé selon l'une des revendications précédentes, **caractérisé en ce que** l'écoulement d'air présente une vitesse identique à celle du moyen d'entrainement de rotation.

5. Procédé selon l'une des revendications précédentes, **caractérisé en ce que** l'écoulement d'air présente une vitesse différente de celle du moyen d'entrainement de rotation.

**6.** Procédé selon l'une des revendications précédentes, **caractérisé en ce que** la roue comprend au moins un moyen de maintien de la suspension de la roue.

**Patentansprüche**

**1.** Verfahren zum Bestimmen des aerodynamischen Widerstandsmoments $M_{aéro\text{-}EM}$ eines Rades, das auf einer Achse angeordnet ist, durch die Messung des Wertes der mechanischen Leistung $P_m$, die auf das Rad anzuwenden ist, um es in Rotation mit einer konstanten Drehzahl $\omega$ zu halten, wobei das Rad mit einem Rotationsantriebsmittel und mit einer Vorrichtung zum Erfassen und/oder Aufzeichnen der numerischen Werte der mechanischen Leistung und derjenigen der Drehzahl ausgestattet ist, **dadurch gekennzeichnet, dass** das Rad durch eine abnehmbare Haube geschützt wird, dadurch, dass es ständig einer Luftströmung ausgesetzt wird, die es ermöglicht, die Wirkungen eines Seitenwindes zu reproduzieren, und die eine Hauptrichtung aufweist, die einen Winkel zwischen -40° und +40° bezüglich derjenigen des Rades aufweist, und dadurch, dass die erfassten Messwerte der Drehzahl $\omega$ und der mechanischen Leistung $P_m$ des Rades in die folgende mathematische Formel eingesetzt werden:

$$P_m = \omega\ (M_{aéro\text{-}EM} + M_f),\qquad\qquad (I)$$

wobei

- $P_m$ die mechanische Leistung bezeichnet, die erforderlich ist, um das Rad in Rotation mit einer konstanten Drehzahl zu halten,
- $\omega$ die Drehzahl des Rades bezeichnet,
- $M_f$ den Wert des Reibungsmoments der Nabe des Rades bezeichnet, und
- $M_{aéro\text{-}EM}$ das aerodynamische Widerstandsmoment des Rades bezeichnet.

**2.** Verfahren nach Anspruch 1, **dadurch gekennzeichnet, dass** die Luftströmung eine Hauptrichtung aufweist, die im Wesentlichen parallel zu derjenigen des Rades ist.

**3.** Verfahren nach einem der vorhergehenden Ansprüche, **dadurch gekennzeichnet, dass** die Achse des Rades bezüglich des Bodens feststehend bleibt.

**4.** Verfahren nach einem der vorhergehenden Ansprüche, **dadurch gekennzeichnet, dass** die Luftströmung eine Geschwindigkeit aufweist, die mit derjenigen des Rotationsantriebsmittels identisch ist.

**5.** Verfahren nach einem der vorhergehenden Ansprüche, **dadurch gekennzeichnet, dass** die Luftströmung eine Geschwindigkeit aufweist, die von derjenigen des Rotationsantriebsmittels verschieden ist.

**6.** Verfahren nach einem der vorhergehenden Ansprüche, **dadurch gekennzeichnet, dass** das Rad wenigstens ein Mittel zum Halten der Aufhängung des Rades umfasst.

**Claims**

**1.** Method for determining the aerodynamic moment of resistance $M_{aero\text{-}EM}$ of a wheel arranged on an axis, by measuring the value of the mechanical power $P_m$ to be applied to the wheel in order to maintain it in rotation at a constant speed $\omega$, the said wheel being equipped with a rotational-drive means and with a device for picking off and/or recording the numerical values of the said mechanical power and those of the rotational speed, **characterized in that** the said wheel is protected by a removable cap, **in that** it is constantly subjected to a flow of air which makes it possible to reproduce the effects of a crossword and has a main direction having an angle of between -40° and +40° with respect to that of the wheel, **and in that** the picked-off measurements of rotational speed $\omega$ and of mechanical power $P_m$ of the said wheel are input into the following mathematical formula:

$$P_m = \omega\ (\ M_{aero\text{-}EM} + M_f)\qquad\qquad \textbf{(I)}$$

where

- $P_m$ represents the mechanical power needed to keep the wheel in rotation at a constant speed,
- $\omega$ represents the rotational speed of the said wheel,
- $M_f$ represents the value of the moment of friction of the hub of the wheel, and
- $M_{aero-EM}$ represents the aerodynamic moment of resistance of the said wheel.

2. Method according to Claim 1, **characterized in that** the flow of air has a main direction substantially parallel to that of the wheel.

3. Method according to one of the preceding claims, **characterized in that** the axis of the wheel remains fixed relative to the ground.

4. Method according to one of the preceding claims, **characterized in that** the flow of air has a speed identical to that of the rotational-drive means.

5. Method according to one of the preceding claims, **characterized in that** the flow of air has a speed different from that of the rotational-drive means.

6. Method according to one of the preceding claims, **characterized in that** the wheel comprises at least one means of holding the wheel suspension.

**EP 2 867 643 B1**

## RÉFÉRENCES CITÉES DANS LA DESCRIPTION

### Documents brevets cités dans la description

- DE 19527742
- DE 102008046552